# EUROPEAN PATENT APPLICATION

(11) **EP 4 506 877 A1**
(43) Date of publication of application: **12.02.2025**
(21) Application number: 23190247.9
(22) Date of filing: 08.08.2023
(51) Int. Cl.: G06Q 20/02, G06Q 20/14, G06Q 20/22, G06Q 20/40, G06Q 20/42

(54) **PAYMENT REDIRECTION SYSTEM**

(71) Applicant: Mastercard International Incorporated, Purchase, NY 10577 (US)
(72) Inventor: Rajput, Jaydeep, Pune 411027 (IN); Groarke, Peter, Dublin 18 (IE); Molitor, Wayne C., O'Fallon, 63368 (US)
(74) Representative: Barker Brettell LLP

(57) **Abstract**

The present invention relates to a method and system (200) for detecting failure at a merchant acquirer associated with a first payment rail and processing a transaction in the event of said failure. Specifically, the method and system involves monitoring transactions (109) between a customer (105) and merchant (103) to determine if there is a reduction or increase in transactions (109) at said merchant (103). Upon detecting a difference in the number of transactions (109) from what would be expected, the merchant (103) can be alerted and provided with the opportunity to use a different payment route.

## Description

### Field

The present invention relates to methods and systems for detecting failure at a merchant acquirer associated with a first payment rail and processing a transaction in the event of said failure.

### Background

There have been numerous incidents in the past where payments made through card networks are unable to be processed due to outages. One such issue that may arise is outages on the acquirer side of the transaction. In the event of such outages, payments cannot be processed using the usual 4-party pull card payment route that is currently used by POS terminals as one of the parties - the acquirer - is unresponsive.

Indeed, payment networks have now been deemed "critical infrastructure" by certain jurisdictions and although card networks have focused on being more resilient there are inevitably going to be instances where these networks are un-operational. When there are problems with payment transactions it often results in abandoned purchases which is an issue for this critical infrastructure.

Acquirer outages affecting payment networks may be experienced across multiple merchants, but as merchants are not typically in communication with each other then it may not be immediately apparent that the issue is with the acquirer rather than an issue specific to a particular merchant's system. This can lead to unnecessary delays in identifying the acquirer issue and providing feedback to the card network provider and/or acquirer. In addition, once the issue has been identified there currently remains no options for completing transactions until the acquirer is operational again. The present invention is aimed at overcoming these and other issues.

### Summary of Invention

According to an aspect there is provided, a computer implemented method for detecting a failure at a merchant acquirer associated with a first payment rail and processing a transaction in the event of said failure, the method comprising: monitoring, at a server, transactions over a first payment rail, said transactions originating at a merchant, over a first time period of a set length, to determine a number of transactions during the first time period; monitoring, at a server, transactions over the first payment rail, said transactions originating at the merchant, over a second time period of said set length, to determine a number of transactions during the second time period; determining, at the server, an average number of transactions originating at said merchant over a time period, of said set length, from said monitoring steps; continually monitoring, at the server, transactions over the first payment rail, said transactions originating at said merchant, over a series of time periods, each time period of the series of time periods being of said set length, and for each time period of the series of time periods: comparing a number of transactions during said time period of the series of time periods to said average number of transactions; detecting, at the server, from this comparison, a deviation, wherein the deviation is a difference e in the number of transactions from the average number of transactions; upon detection of said deviation, alerting, by the server, to the merchant that there is a failure at the merchant acquirer associated with the first payment rail; sending, from the server, to said merchant approval to use a second payment rail such that the merchant can route transactions through said second payment rail when there is a failure at the merchant acquirer associated with the first payment rail.

In this way, through monitoring, it can be automatically determined when an acquirer is down (i.e., failure on the acquirer server on a first payment rail) based on comparing the typical (i.e., average) number of transactions over time to the actual number of transactions detected. In addition, if it is determined that the number of transactions during the current time period has changed from the average then an alert is sent to the merchant approving them to use a different payment rail that they are not currently using.

As payment networks are deemed critical infrastructure, similar to that of power networks, it is desirable to remedy any downtime quickly. Advantageously, in this way the merchant can still process transactions in the event of this failure, rather than having down time where transactions cannot be processed.

Determining the number of transactions is determining the total number (i.e., quantity) of transactions attempted by the merchant within the time period (i.e., the first or second time period). In some arrangements, the method may comprise performing said monitoring for multiple (i.e., greater than two) time periods. In this way, the average number of transactions may be determined from more than two time periods. The average number of transactions is determined by monitoring the number of transactions in each of the multiple time periods (i.e., first and second time periods) such that the average number of transactions is over a typical time period of the same length as the multiple time periods (i.e., first and second time period). For example, the average number of transactions originating at a merchant can be determined by averaging the number of transactions over the first and second time periods.

In other arrangements, the average number of transactions may be determined at set intervals in time such that the average may be updated. For instance, said monitoring steps to determine the average may be performed once a day, week, month, or any other increment in time. In this way, the average number of transactions may be kept up to date to typical activity at the merchant.

The step of continually monitoring, at the server, transactions over the first payment rail, said transactions originating at said merchant, over a series of time periods is subsequent to the step of monitoring during the first and second time periods (i.e., the average has already been determined to enable the continually monitoring). However, as outlined above, the average may be updated over time such that the real time continuous monitoring can be compared to an updated average value.

The server, otherwise called monitoring server, may be a server that is maintained by the card network. In other arrangements, the monitoring server may be independent of the card network.

Preferably, the method may further comprise: at the merchant: receiving from the server, an alert, that there is a failure at the merchant acquirer associated with a first payment rail; receiving from the server, approval to use a second payment rail such that the merchant can route transactions through said second payment rail when there is a failure at the merchant acquirer associated with a first payment rail; routing a transaction through the second payment rail.

Routing the transaction through the second payment rail may comprise: presenting to a customer, by the merchant, an option to make a payment using the second payment rail, wherein using the second payment rail comprises using a third party acquirer; upon receiving approval from the customer of said option, submitting an authorisation request from the third-party acquirer to an issuer associated with a card belonging to the customer; receiving at the third-party acquirer, an authorisation approval response, from the issuer associated with a card belonging to the customer; crediting funds from the card of the customer to an account associated with the third party acquirer; crediting the funds from the account associated with the third-party acquirer to an issuer associated with a card belonging to the merchant such that the card belonging to the merchant is credited.

In this way, through using a third-party acquirer funds can be authorised from the customers card and received at an account associated with the third-party acquirer in a first leg of the transaction. The third-party acquirer can then credit the funds to a card belonging to the merchant in a second leg of the transaction. This enables the merchant to receive the funds without having to use the merchant acquirer, which is currently down, thereby enabling the customer to make a payment and complete the transaction.

The third-party acquirer may be a money bureau. In other instances, it may be a Mastercard Send^{®} client, or any other type of server capable of performing this function. In some instance, the third-party acquirer may be associated with the monitoring server. In some instances, the monitoring server may comprise the third-party acquirer. In other arrangements, the monitoring server may be a separate entity to the third-party acquirer.

The presenting to the customer an option to make a payment using the second payment rail may comprise a request for payment details from the customer required to carry out the transaction using the second payment rail. Alternatively, or in addition, the option may comprise a message sent to or displayed to the customer giving them the option to select an option to make the payment using the second payment rail.

The receiving approval from the customer of said option may be the receipt of the payment details of the customer. These may be the customer card number, or any other type of account number.

The card belonging to the customer may be a credit card. In other arrangements, it may be a debit, store, or any other type of transaction card. The card belonging to the merchant may be a credit card. In other arrangements, it may be a debit, store, or any other type of transaction card.

Preferably, prior to presenting to the customer said option, the method may further comprise: sending, from the merchant to the third-party acquirer, a request to register with said third party acquirer, wherein said request comprises providing merchant account details to said third party acquirer, said account details for crediting funds to the card belonging to the merchant.

Advantageously, through the merchant pre-registering with the third-party acquirer this can speed up the transaction process when a customer is trying to make a purchase at a merchant and the merchant's acquirer is down. If the merchant was not pre-registered the customer would have to wait for the merchant to register with the third party before being able to make the transaction.

This also reduces the number of messages being sent on the network at a time when the load on the network may be high when there is a failure of merchant acquirer. Specifically, if there is a failure at the merchant acquirer this may typically affect multiple merchants who use the same acquirer. Thus, when the failure occurs if the merchants have not pre-registered with the third-party acquirer there will be a large number of messages being sent at once from different merchants to register with the third-party acquirer. This may cause a strain on the network and may also lead to further complications on the network thus reducing the time for commencing the transactions on the second payment rail.

The account details for crediting funds to the card belonging to the merchant may be a card number. For instance, it may be a primary account number (PAN). In addition or alternatively, this request to register may further comprise a merchant identifier. The merchant identifier is for uniquely identifying the merchant.

Alternatively, or in addition, wherein routing the transaction through the second payment rail may comprise: presenting to a customer, by the merchant, an option to make a payment using the second payment rail, wherein using the second payment rail; upon receiving approval from the customer of said option, providing details of a bank account associated with the merchant to the customer; receiving a transfer of funds from a bank account associated with the customer to the bank account associated with the merchant.

In this way, the merchant may use a second payment rail by using a bank-to-bank transfer. Thus, the customer may make a payment through a bank transfer rather than through, for instance, a card network. The transfer may involve using open banking.

In some arrangements the first payment rail may be a card payment rail. The first payment rail may be a 4-party pull transaction via a card network. This may involve merchant, merchant acquirer, customer, customer issuer. This may be using the Mastercard^{®} card network, or the VISA^{®} card network. Or any other type of card network. In this instance, the transactions that are monitored are 4-party pull transactions.

In some arrangements, the second payment rail may be an open banking transaction rail, or a push to card transaction. The second payment rail is a different payment rail to the first payment rail. The second payment rail may be a push payment from one account to another. This may involve the customer transferring funds from their account to the merchant's account. This may involve using open banking. Alternatively, the second payment rail may involve push to card where a third-party card/account is credited with funds from the customer's card that they are attempting the transaction and the third-party card/account pushes the funds to the merchant's card such that the merchant receives the funds.

The deviation may be a reduction. The average number of transactions may be an average number of successful transactions. The deviation may be a reduction in the number of successful transactions. A successful transaction is a transaction that has been successfully completed, i.e., a transaction where the merchant has successfully received the funds from the customer.

By monitoring the number of successful transactions it can be determined if the number of successful transactions has varied from the average number of successful transactions that would be expected to occur. For instance, if there is a significant drop then that may likely imply that the acquirer is down. The method may involve taking into account factors that may result in an expected reduction. These factors may include national holidays, day of the week, time of year, for instance. Alternatively, in some instances the reduction may involve no transactions within a certain time period. If this is detected, then the alert may be sent.

The deviation may be an increase. The average number of transactions may be an average number of unsuccessful transactions. The deviation may be an increase in the number of unsuccessful transactions. An unsuccessful transaction is a transaction that has not been successfully completed, i.e., a transaction where the merchant has not successfully received the funds from the customer, after initiating a transaction. Transactions may be unsuccessful for a number of reasons. However, observing a significant increase in unsuccessful transactions may imply that there is a failure at the merchant acquirer.

Preferably, alerting, by the server, to the merchant that there is a failure at the merchant acquirer associated with the first payment rail, may be performed if said detected deviation exceeds a threshold value. In this way, this allows deviation from the average number of transactions by a certain amount which may arise due to random fluctuations in number of transactions, due to a variety of different factors. By having a threshold set at a certain level this may take into account these expected variations, whilst at the same time detecting significant changes from the average indicative of a failure at the acquirer.

The transaction may be transaction at a point of sale (POS) terminal. Alternatively, the transaction may be e-commerce transactions. The transaction may otherwise be referred to as a payment. The payment may be a payment being made by the user (i.e., customer) to the merchant.

According to a further aspect there is provided a server, for detecting a failure at a merchant acquirer associated with a first payment rail and processing a transaction in the event of said failure, the server comprising a memory and processor, wherein the server is configured to: monitor transactions over a first payment rail, said transactions originating at a merchant, over a first time period of a set length, to determine a number of transactions during the first time period; monitor transactions over a first payment rail, said transactions originating at a merchant, over a second time period of said set length, to determine a number of transactions during the second time period; determine an average number of transactions originating at said merchant over a time period, of said set length, from said monitoring steps; continually monitor transactions over the first payment rail, said transactions originating at said merchant, over a series of time periods, each time period of the series of time periods being of said set length, and for each time period of the series of time periods: comparing a number of transactions during said time period of the series of time periods to said average number of transactions; detect from this comparison, a deviation, wherein the deviation is a difference in the number of transactions from the average number of transactions; upon detection of said deviation, alert to the merchant that there is a failure at the merchant acquirer associated with the first payment rail; send to said merchant approval to use a second payment rail such that the merchant can route transactions through said second payment rail when there is a failure at the merchant acquirer associated with the first payment rail.

According to a further aspect there is provided, a system for detecting a failure at a merchant acquirer associated with a first payment rail and processing a transaction in the event of said failure, the system comprising: the server of the above aspect; and a merchant.

In some arrangements, the server may comprise a third-party acquirer.

The system may be further configured to perform the methods of the above aspect.

According to a further aspect there is provided, a computer program product comprising instructions which, when the program is executed by a computer, cause the computer to carry out the method of: monitoring, at a server, transactions over a first payment rail, said transactions originating at a merchant, over a first time period of a set length, to determine a number of transactions during the first time period; monitoring, at a server, transactions over the first payment rail, said transactions originating at the merchant, over a second time period of said set length, to determine a number of transactions during the second time period; determining, at the server, an average number of transactions originating at said merchant over a time period, of said set length, from said monitoring steps; continually monitoring, at the server, transactions over the first payment rail, said transactions originating at said merchant, over a series of time periods, each time period of the series of time periods being of said set length, and for each time period of the series of time periods: comparing a number of transactions during said time period of the series of time periods to said average number of transactions; detecting, at the server, from this comparison, a deviation, wherein the deviation is a difference in the number of transactions from the average number of transactions; upon detection of said deviation, alerting, by the server, to the merchant that there is a failure at the merchant acquirer associated with the first payment rail; sending, from the server, to said merchant approval to use a second payment rail such that the merchant can route transactions through said second payment rail when there is a failure at the merchant acquirer associated with the first payment rail.

The computer program product may be further configured to perform the methods of the above aspect.

According to a further aspect there is provided, a non-transitory computer-readable medium comprising instructions which, when executed by a computer, cause the computer to carry out the method of monitoring, at a server, transactions over a first payment rail, said transactions originating at a merchant, over a first time period of a set length, to determine a number of transactions during the first time period; monitoring, at a server, transactions over the first payment rail, said transactions originating at the merchant, over a second time period of said set length, to determine a number of transactions during the second time period; determining, at the server, an average number of transactions originating at said merchant over a time period, of said set length, from said monitoring steps; continually monitoring, at the server, transactions over the first payment rail, said transactions originating at said merchant, over a series of time periods, each time period of the series of time periods being of said set length, and for each time period of the series of time periods: comparing a number of transactions during said time period of the series of time periods to said average number of transactions; detecting, at the server, from this comparison, a deviation, wherein the deviation is a difference in the number of transactions from the average number of transactions; upon detection of said deviation, alerting, by the server, to the merchant that there is a failure at the merchant acquirer associated with the first payment rail; sending, from the server, to said merchant approval to use a second payment rail such that the merchant can route transactions through said second payment rail when there is a failure at the merchant acquirer associated with the first payment rail.

The non-transitory computer-readable medium may be further configured to perform the methods of the above aspect.

### Description of Figures

Figure 1 shows a system for detecting a failure at a merchant acquirer associated with a first payment rail and processing a transaction in the event of said failure according to an aspect of the present invention;
Figure 2 shows a schematic view of a message flow between different entities when performing a transaction using a 4 party pull transaction;
Figure 3 shows a schematic view of a message flow between different entities when detecting a failure at a merchant acquirer associated with a first payment rail and processing a transaction in the event of said failure according to an aspect of the invention showing the first leg of the transaction when a third-party acquirer receives the funds from the customer card;
Figure 4 shows a schematic view of a message flow between different entities when detecting a failure at a merchant acquirer associated with a first payment rail and processing a transaction in the event of said failure according to an aspect of the invention showing the second leg of the transaction when a third-party acquirer credits the funds to the merchant card;
Figure 5 shows a flow diagram of a method for detecting a failure at a merchant acquirer associated with a first payment rail and processing a transaction in the event of said failure according to an aspect of the present invention; and
Figure 6 shows a data processing device according to aspects of the present disclosure.

### Detailed Description

The following terms that will be used herein are provided below along with their definitions:
Payment rail: This is a platform or network infrastructure that effects a particular type of transaction. Each type of transaction will have associated with it a specific payment rail. Types of payment rails include 4 party pull card transactions, bank-to-bank transactions, etc.

Payment type: This is the category of payment, i.e., each payment type has a specific payment rail associated with it. A payment type may be, for instance, a card payment (e.g. 4 party pull card transactions), or an bank-to-bank transactions (e.g. using open banking).

Open banking payment: This is a bank-to-bank transaction where the payment is made directly between two bank accounts. This may be facilitated by the use of one or more application programming interfaces (APIs).

4-party pull transaction: This is a transaction that is made using a card that is associated with a card account. Types of cards may include, but are not limited to, credit-, debit-, smart, cash-, and charge cards. The transaction involves four main entities: the merchant, their acquirer, the customer, and their issuer.

Payment card network: The payment card network is a network that facilitates card transactions between acquirer and issuers. Examples of card networks include Mastercard^{®}, VISA^{®}, American Express^{®} and others. This may include card networks for debit cards, or credit cards.

PAN: primary account number or payment card number. This is the card holder's primary account number for their card (e.g., debit, credit etc.).

Bank account number: This is the account number associated with the bank account. For instance, the bank account from which an open banking payment may be made. In some instances this may be referred to as International Bank Account Number or IBAN.

Merchant: This is the party which is selling goods or services which the customer is purchasing.

Third-party money bureau: The third-party money bureau may be a third-party that is able to process transactions and act as an intermediary in first receiving funds and then in transferring them to a different entity. An example of a third-party money bureau may be Mastercard Send.

Monitoring server: the monitoring server is responsible for monitoring transactions between merchants and customers, and upon detecting that there is a failure at the merchant acquirer instructing the merchant to use a different payment rail. In some instances, the monitoring server may be controlled by the payment card network.

The present invention relates to a method and system for detecting failure at a merchant acquirer associated with a first payment rail and processing a transaction in the event of said failure. Specifically, the method involves monitoring transactions originating at merchants (i.e., transactions between a customer and merchant) to determine if there is a reduction or increase in transactions at said merchant. Upon detecting a change in the number of transactions from what would be expected, the merchant can be alerted and provided with the opportunity to use a different payment route. As payment networks are deemed critical infrastructure, similar to that of power networks, it is essential to remedy any downtime quickly. Advantageously, the present invention enables the merchant to continue to process transactions even in the event of this failure, rather than having down time where transactions cannot be processed.

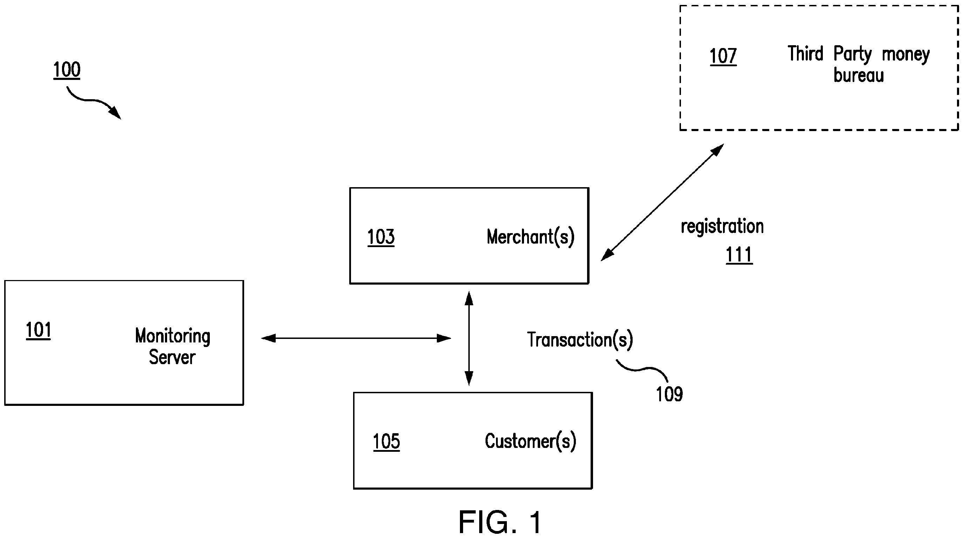

Figure 1 shows a system 100 for detecting failure at a merchant acquirer associated with a first payment rail and processing a transaction in the event of said failure. The system comprises merchant 103 and customer 105. The customer 105 is attempting to make a transaction 109 at the merchant 103, such as to purchase goods or services from the merchant 103. These transactions are typically point of sale (POS) transactions. However, in some arrangements the transactions may be e-commerce transactions.

Monitoring server 101 is shown that is responsible for monitoring the transaction(s) 109 between the merchant 103 and the customer 105. Although a single merchant 103 and customer 105 is shown here, the monitoring server 101 will be responsible for monitoring transactions 109 between multiple different merchants 103 and customers 105. This enables a collective determination of issues affecting multiple merchants 103.

Third party money bureau 107 is in communication with merchant 103. The merchant 103 may be registered with the third-party money bureau 107 through one or more registration messages 111. This enables the merchant to use the third-party money bureau 107 to complete transactions in the event of a failure at the merchant acquirer. This will be described in more detail below.

The transactions 109 initiated at the merchant 103 are 4-party pull transactions, as would be commonly used when making a payment at a POS terminal.

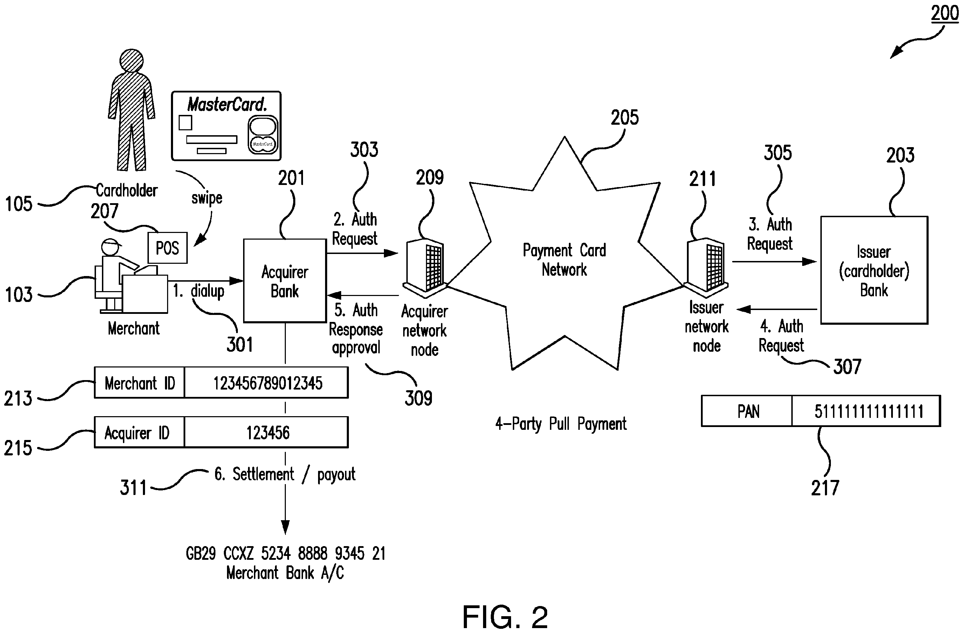

Figure 2 shows a typical 4-party pull transaction 200. A 4-party pull transactions is called as such as it involves four main parties: customer 105, merchant 103, acquirer bank 201, and issuer bank 203. The acquirer bank 201, otherwise called acquirer, which is associated with the merchant 103, is responsible for "pulling" the funds from the issuer bank 203, otherwise called the issuer, which is associated with the customer 105. This is achieved using payment card network 205 which facilitates the transaction.

The 4-party pull transaction process 200 will now be described with reference to Figure 2. To start the transaction the merchant 103 requests the payment from the customer 105, and the customer 105 presents their card to the merchant's POS terminal 207. This may be through swiping their card or using a contactless (NFC technology) tap. The merchant's POS terminal 207 then dials up 301 to the acquirer 201 to commence the transaction. The acquirer 201 is the merchant's bank with which their account is held which is intended to receive the funds from the customer 103.

The acquirer 201 sends an authorisation request message 303 via the acquirer network node 209 and the payment card network 205 to the issuer network node 211. The issuer network node 211 then sends an authorisation request 305 to the issuer 203. The issuer 203 is the bank that has issued the customer's card. Upon authorising the transaction at the issuer 203 an authorisation approval response message 307 is sent from the issuer 203 via the issuer network node 211 and payment card network 205 to the acquirer network node 209. The acquirer network node 209 then sends the authorisation response approval 309 to the acquirer 201. Once authorised the settlement process 311 then occurs where the funds are then transferred from the customer's card account at the issuer 203 to the merchant's account at the acquirer 201.

As can be seen in Figure 2 three forms of identifiers are provided in the transaction process. The merchant ID 213, the acquirer ID 215, and the PAN 217. The merchant ID 213 is unique to the merchant 103 and helps identify them enabling the acquirer 201 to know which merchant 103 the messages (e.g. 301, 303 and 309) relate to. The acquirer ID 215 is unique to the acquirer 201 and helps identify them enabling the issuer 203 to know which acquirer 201 the messages (e.g. 305, 307 and 309) relate to. The PAN 217 is the primary account number or payment card number. This is the customer's 105 unique primary account number for their card (e.g., debit, credit etc.). The PAN enables the issuer 203 to know which account the transaction relates. Each of these three identifiers may be included in each of the messages shown in Figure 2. Alternatively, the identifiers may be only included in certain messages. For instance, the merchant ID and acquirer ID may be included in all of the messages (301 to 311) but the PAN may be included in only messages 301 to 305.

The 4-party pull transaction process 200 of Figure 2 shows a successful transaction. However, in some instances the transaction may be unsuccessful in the event of a failure at the acquirer 201. For instance, an acquirer server may be down and un-operational. This may be the acquirer network node 209, and/or a different server associated with the acquirer 201, being unable to function and pass on messages to the card network, for instance. In such an instance, typically the merchant 103 would be unable to process the customer's 105 transaction. As the acquirer 201 is responsible for many different merchants 103 this problem may not be isolated at a single merchant 103 and may involve widespread disruption. However, typically such a disruption may not initially be evident as each merchant 103 may attribute it to their own POS systems 207 that are not operational and it not be apparent that it is a wider issue. The system 100 of the present invention is aimed at solving this problem.

Monitoring server 101 is responsible for monitoring the transactions between a merchant 103 and customer 105. In some aspects, the monitoring server is responsible for monitoring transactions between multiple merchants 103 and their customers 105.

The role of the monitoring server 101 involves determining the number of transactions that are made between the merchant 103 and the customer 105 to determine a typical number of transactions that occur in a certain time period. This may, in some instances, be the typical number of successful transactions (i.e. those that did lead to the completion of the transaction shown in Figure 2). Alternatively, this may be the typical number of unsuccessful transactions (i.e. those that did not lead to the completion of the transaction shown in Figure 2). This typical number of transactions is the average number of transactions in a time period. This may be, for instance, the average number of transactions in a time period, such as an hour, half hour, 15 minutes, or any other time period. This is achieved by monitoring the number of transactions over a first time period (i.e. for a first hour), then over a second time period (i.e. a second hour at a later point in time) and determining the typical average number of transactions for said time period from these two monitoring periods. The transactions being monitored are 4-party pull transactions as shown in Figure 2.

The monitoring server 101 then uses the determined average number of transactions when continually monitoring the 4-party pull transactions between merchant(s) and customer(s) in real time to compare to a detected number of transactions during a time period of the same length (e.g. an hour in the above described example). If the monitoring server detects that that there is a deviation in the number of transactions from the average number of transactions this indicates that there is a problem at the acquirer.

The average number of transactions may be the average number of transactions for a single merchant. Alternatively, the average number of transactions may be an average number of transactions for multiple merchants if multiple merchants are being monitored. By monitoring multiple merchants this gives a collective view of different merchants all using the same acquirer 201. This enables the monitoring server to distinguish from issues isolated at a single merchant to those that are affecting the acquirer 201 which affects multiple merchants 103.

In the scenario that the average number of transactions being monitored is the number of successful transactions, if there is a drop in number of successful transactions then this may imply that the acquirer is not functional such that the 4-party transaction as shown in Figure 2 cannot proceed past the acquirer 201. This may be that no response is received when sending the dialup message 301. Alternatively, if the average number of transactions being monitored is the number of unsuccessful transactions, if there is an increase in the number of unsuccessful transactions then this may imply that the acquirer is not functional such that the 4-party transaction as shown in Figure 2 cannot proceed past the acquirer 201.

The monitoring server 101 then alerts to the merchant 103 that there is a failure at the acquirer 201. This implies that the 4 party pull transaction process as shown in Figure 2 will not be successful as the acquirer 201 is not operational.

It may be expected that there is some deviation from the average number of transactions that is permitted without implying that the acquirer 201 is down. In some instances, a threshold value is set that the deviation has to exceed before an alert is sent to the merchant 103. This is because it may be expected that there will be some fluctuation in transactions. In some arrangements, the threshold may take into account changes based on, for instance, the time of day, the time of year, or other external factors that would expect a difference in the number of transactions. Thus, the threshold may be changed over time.

The monitoring server 101 then sends to the merchant 103 approval to use a different payment type. For instance, this may be a different payment rail than the card payment rail that does not require the acquirer 201 to complete the transaction. This approval to use a different payment type may be sent along with the alert indicating that there is a failure at the acquirer. Alternatively, it may be sent separately as separate messages. The merchant 103 may not be normally permitted to use different payment types by their bank and/or the payment card network. However, in this instance they are permitted in doing so whilst the acquirer 201 is down.

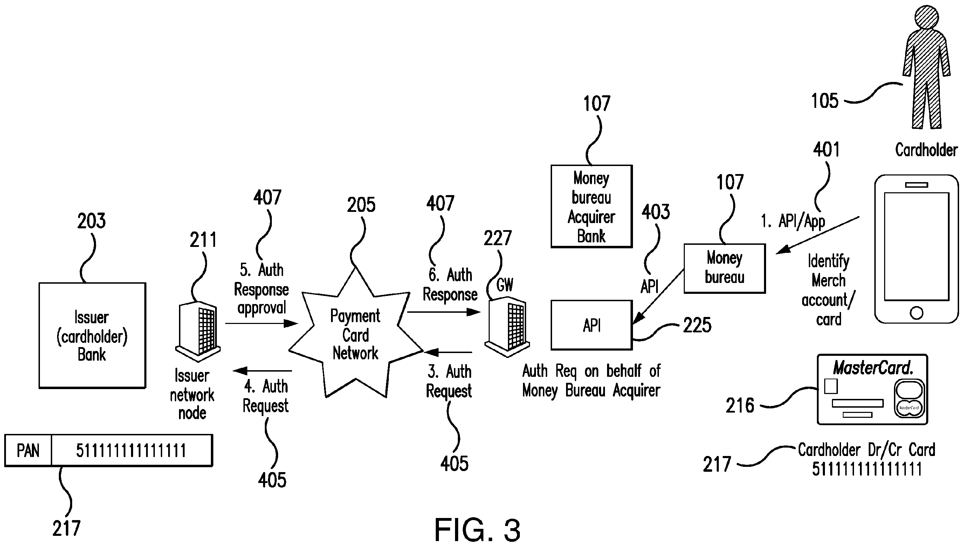

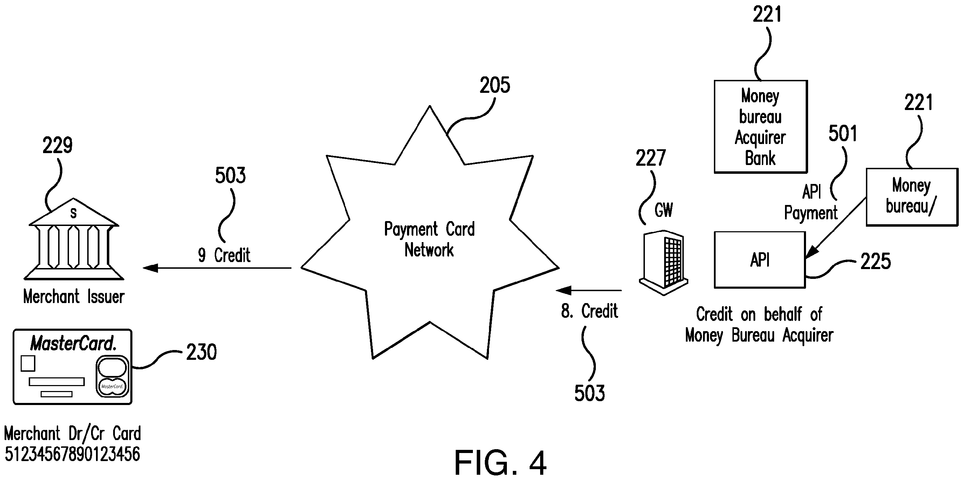

Once the merchant 103 has received this approval they may then use a different payment type to carry out the transaction with the customer 105. Figures 3 and 4 show one such example of how payment may be completed using a different payment type in the event of the acquirer 201 being identified as being un-operational.

Figure 3 shows a schematic view of a message flow between different entities after detecting the failure at a merchant acquirer 201 showing the first leg of the transaction. In this case, rather than using the merchant acquirer 201 for a 4-party pull transaction an alternative approach is taken. The merchant 103 requests from the customer 105 approval to use the alternative payment rail (this involves presenting the user with the option to make the payment using this different rail). Upon receiving the customer's approval to use the alternative payment rail the merchant 103 requests the customer's card details with which the customer 105 wishes to make the payment. In some instances, the request for approval may be the same as the request for card details and by receiving the card details from the customer 105 this may be deemed to be their approval. In other instances, separate messages may be sent for the approval and request for card details.

The merchant 103 upon receiving the customer's card details then instigates payment through the money bureau 107. The purpose of the third-party money bureau 107 is to act as an acquirer given that the merchant's acquirer 201 is not functional. As shown in Figure 3 the third-party money bureau 107 may be accessed by the merchant 103 through launching an API on a merchant device. The merchant device may be a smart phone, POS terminal, or any other type of computer terminal.

The customer 105 may launch an app on their mobile device that sends the card details to the merchant's device. In this way this can ensure that the customer's account details stay private from interception by third parties. In other instances, the card details may be provided to the merchant 103 verbally by the customer.

At step 401 the merchant 103 sends via the API the merchant identifier to the third-party money bureau 107. The merchant 103 is typically pre-registered with the third-party money bureau 107 to carry out transactions in the case of failures at their acquirer 201, as will be explained below. If they are not already registered, the merchant 103 may need to register with the third-party money bureau 107. The merchant 103 also sends in 401 the card holder details, such as cardholder's card number 217 that has been provided to the merchant 103.

The money bureau 221 then launches 403 its API 225 communicating with the gateway 227 associated with the money bureau 107 to request the payment from the issuer 203. The gateway 227 sends an authorisation request message 405 through the payment card network 205 to the issuer network node 211 of the cardholder's issuer 203. An authorisation response approval message 407 is then sent (if the transaction is authorised by the issuer 203) to the gateway 227. The transaction is then authorised for transfer to the third-party money bureau 107. The funds are then transferred to the third-party money bureau 107 account.

The second leg of the transaction, following on from Figure 3, is shown in Figure 4. Referring to Figure 4, the money bureau 221 then again launches 501 its API 225 communicating with the gateway 227 associated with the money bureau 107 to push a credit of the payment through the gateway 227 from the money bureau to the merchant's card 230. As can be seen, the gateway 227 sends the credit 503 via the payment network 205 to the merchant issuer 229 such that the payment is credited to the merchant's card 230.

The purpose of the two legs is such that even in the event of the merchant's acquirer 201 being down and un-operational the transactions at the merchant 1030 can still proceed. The first leg as shown in Figure 3 involves the use of the third-party money bureau 107 to act as an acquirer to be credited with the funds from the customer's card 216. The second leg then credits the funds from the third-party money bureau 107 to the merchant's card 230. In this way, the funds are obtained by the merchant 103 (via a credit to their card), from the customer 105, even if the merchant's acquirer 201 is un-operational. This means that the transactions can proceed reducing and/or avoiding any downtime. This approach also ensures that the security of the transaction is maintained as the payments are still going through an authorisation process as they are during a 4 party pull transaction. However, rather than the transactions being authorised against the merchant acquirer 201 they are instead authorised against the third-party money bureau 107.

As outlined above, the merchant 103 may be registered with the third-party money bureau 107. They may be pre-registered in advance of receiving the alert from the monitoring server 101. Advantageously, this means that as the merchant 103 is pre-registered they do not need to go through a registration process after having received an alert that the acquirer 201 is down. This reduces the time needed to commence the transaction through the alternative payment route. In addition, as the third-party money bureau 107 may be used by multiple merchants, by pre-registering this reduces the load on the third-party money bureau 107 at a time when there will already be an increased load on its resources from the requests to use this payment route, when the acquirer 201 is down.

The registration process may involve the merchant 103 sending a plurality of different identifiers to the third-party money bureau 107 when registering. The identifiers may include at least one of a merchant identifier 213, and/or an acquirer ID 215 as discussed above. The identifiers may also include the merchant's card details 230 of the card that is to be credited in the case of using the alternative payment route, such as shown in Figures 3 and 4. This may include the PAN or account number associated with the merchant's card 230. In some arrangements, the identifier may include an IBAN allowing the merchant to be credited by a SEPA Push payment. In this way, when the merchant's 4 party pull transaction fails the merchant may be able to select equivalent identifiers for alternative payment types to use.

Figure 3 and 4 show one example process that may be used by the merchant when using a different payment rail to complete a transaction after an alert from the monitoring server 101. However, other alternative payment rails/payment types may be used instead of that shown in Figure 3 and 4. In such instances, the third-party money bureau 107 may not be required.

For instance, upon receiving the alert from the monitoring server 101 that there is a failure at the acquirer 201, the merchant 103 may choose to use a bank-to-bank transfer to obtain payment from the customer 105. For instance, this may involve using an open banking payment. Once the merchant 103 has been given approval that they may use a different payment type to carry out the transaction with the customer 105 then they may present their payment details to the customer 105. The payment details may include the merchant's bank account number. The customer may then initiate a bank transfer to the merchant's bank account such that the funds are pushed to the merchant's bank account. In some arrangements, this may be done using the third party money bureau 107, however, in other arrangements the third party money bureau 107 may not be involved.

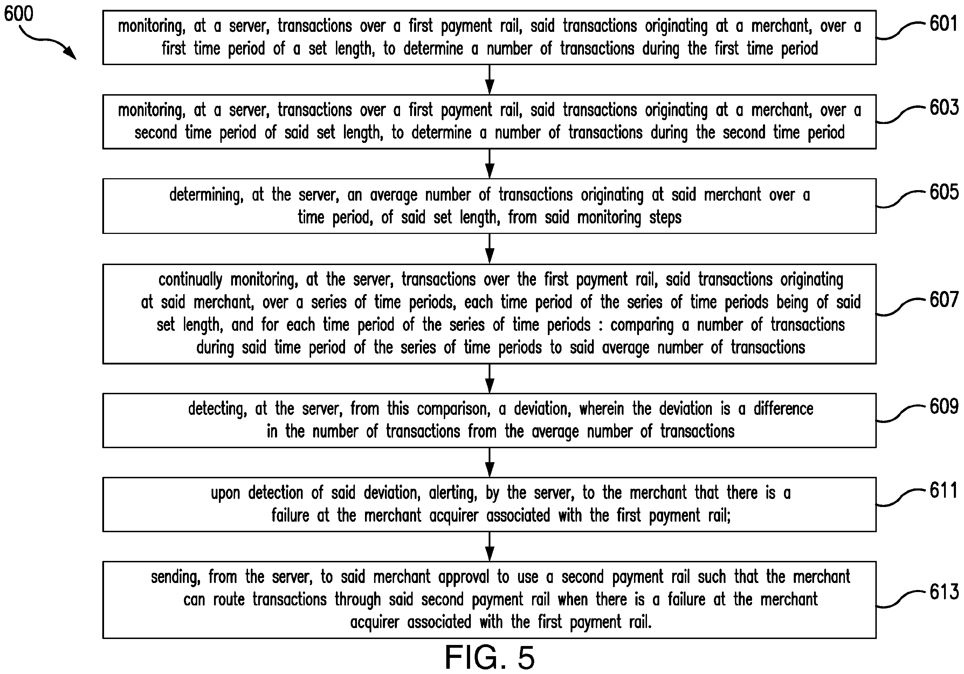

Figure 5 shows a flow diagram of a method 600 for detecting a failure at a merchant acquirer associated with a first payment rail and processing a transaction in the event of said failure according to an aspect of the present invention.

At step 601 the server monitors transactions over a first payment rail, said transactions originating at a merchant, over a first time period of a set length, to determine a number of transactions during the first time period.

At step 603 the server monitors transactions over a first payment rail, said transactions originating at a merchant, over a second time period of said set length, to determine a number of transactions during the second time period.

At step 605 the server determines an average number of transactions originating at said merchant over a time period, of said set length, from said monitoring steps.

At step 607 the server continually monitors transactions over the first payment rail, said transactions originating at said merchant, over a series of time periods, each time period of the series of time periods being of said set length, and for each time period of the series of time periods: comparing a number of transactions during said time period of the series of time periods to said average number of transactions.

At step 609 the server detects from this comparison, a deviation, wherein the deviation is a difference in the number of transactions from the average number of transactions.

At step 611 upon detection of said deviation, the server alerts, to the merchant that there is a failure at the merchant acquirer associated with the first payment rail.

At step 613 the server sends to said merchant approval to use a second payment rail such that the merchant can route transactions through said second payment rail when there is a failure at the merchant acquirer associated with the first payment rail.

The method 600 may be carried out by the system 100 of Figure 1 where the monitoring server 101 is said server.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

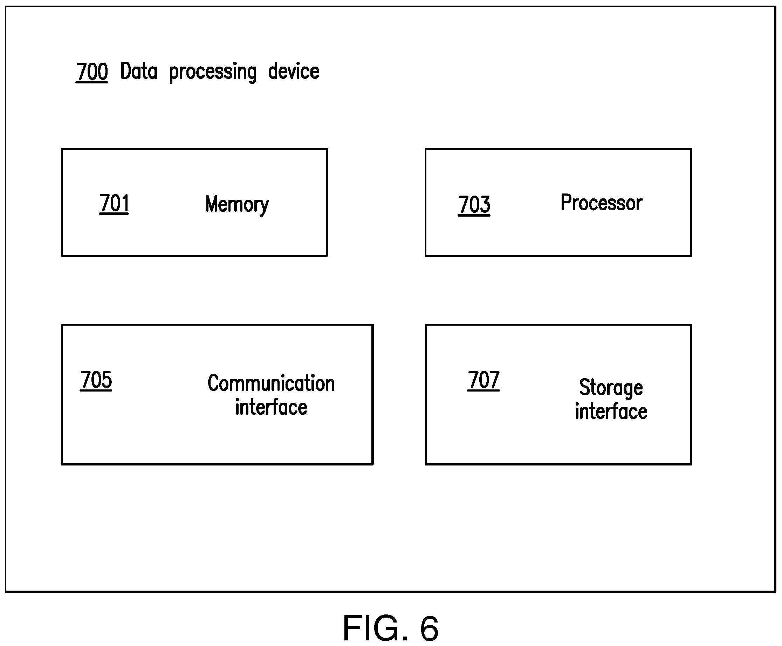

Similarly, any steps of any of the methods described herein may be performed by data processing devices. By way of example, Figure 6 shows in schematic form a data processing device 700 that is suitable for performing the functions of monitoring server 101, third party money bureau 107, or the merchant/customer servers. The data processing device 700 may automatically perform any of the methods described herein.

Data processing device 700 includes a processor 703 for executing instructions. Instructions may be stored in a memory 701. Processor 703 may include one or more processing units (e.g., in a multi-core configuration) for executing instructions. The instructions may be executed within a variety of different operating systems on the data processing device 700, such as UNIX, LINUX, Microsoft Windows^{®}, etc. More specifically, the instructions may cause various data manipulations on data stored in memory 701 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 703 is operatively coupled to a communication interface 705 such that data processing device 700 can communicate with a remote device, such as another data processing device of the system. For example, communication interface 705 may receive communications from another member of the system.

Processor 703 may also be communicatively coupled to a storage device such as a database, depending on the function of data processing device 700 within the context of the system. The storage device is any computer-operated hardware suitable for storing and/or retrieving data, where in the case of a secure storage medium the data is stored and retrieved securely.

The storage database may store details of the transactions or identifiers, for instance, and it can be external to data processing device 700 and located remotely. Alternatively, it can be integrated in data processing device 700. For example, data processing device 700 may include memory 701 as one or more hard disk drives acting as a storage database. Alternatively, where the storage database is external to data processing device 700, it can comprise multiple storage units such as hard disks or solid-state disks in a redundant array of inexpensive disks (RAID) configuration. The storage database may include a storage area network (SAN) and/or a network attached storage (NAS) system.

Processor 703 can be operatively coupled to the storage device (storage database) via a storage interface 707. Storage interface 707 is any component capable of providing processor 703 with access to the storage device. Storage interface 707 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 703 with access to the storage device.

Memory 701 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above-described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

While the disclosure has been described in terms of various embodiments, the person skilled in the art will recognise that the disclosure can be practiced with modification within the spirit and scope of the claims.

The third-party money bureau 107 as described above performs the role of acting as an acquirer 103 when the acquirer is down. The third-party money bureau 107 may be implemented by Mastercard Send in some instances. In other instances, it may be any other type of server that is capable of performing this role.

The above methods are described in relation to a transaction at a POS device. However, it would be understood that these transactions may alternatively be a different type of transaction. For instance, it may relate to ecommerce transaction.

The merchant ID, acquirer ID, and PAN are shown as identifiers in the above described methods. However, the method is not restricted to these identifiers and any other type of identifier as appropriate may be used.
In some instance, the third-party money bureau may be associated with the monitoring server. In other instances, the monitoring server may comprise the third-party money bureau. In other arrangements, the monitoring server may be a separate entity to the third-party money bureau and not associated with it.

The monitoring server 101, may be a server that is maintained by the card network 205. In other arrangements, the monitoring server 101 may be independent of the card network 205.

## Claims

1. A computer implemented method for detecting a failure at a merchant acquirer associated with a first payment rail and processing a transaction in the event of said failure, the method comprising:
monitoring, at a server, transactions over a first payment rail, said transactions originating at a merchant, over a first time period of a set length, to determine a number of transactions during the first time period;
monitoring, at a server, transactions over the first payment rail, said transactions originating at the merchant, over a second time period of said set length, to determine a number of transactions during the second time period;
determining, at the server, an average number of transactions originating at said merchant over a time period, of said set length, from said monitoring steps;
continually monitoring, at the server, transactions over the first payment rail, said transactions originating at said merchant, over a series of time periods, each time period of the series of time periods being of said set length, and for each time period of the series of time periods: comparing a number of transactions during said time period of the series of time periods to said average number of transactions;
detecting, at the server, from this comparison, a deviation, wherein the deviation is a difference in the number of transactions from the average number of transactions;
upon detection of said deviation, alerting, by the server, to the merchant that there is a failure at the merchant acquirer associated with the first payment rail;
sending, from the server, to said merchant approval to use a second payment rail such that the merchant can route transactions through said second payment rail when there is a failure at the merchant acquirer associated with the first payment rail.

2. The computer implemented method of claim 1, the method further comprising:
at the merchant:
receiving from the server, an alert, that there is a failure at the merchant acquirer associated with a first payment rail;
receiving from the server, approval to use a second payment rail such that the merchant can route transactions through said second payment rail when there is a failure at the merchant acquirer associated with a first payment rail;
routing a transaction through the second payment rail.

3. The computer implemented method of claim 2, wherein routing the transaction through the second payment rail comprises:
presenting to a customer, by the merchant, an option to make a payment using the second payment rail, wherein using the second payment rail comprises using a third party acquirer;
upon receiving approval from the customer of said option, submitting an authorisation request from the third-party acquirer to an issuer associated with a card belonging to the customer;
receiving at the third-party acquirer, an authorisation approval response, from the issuer associated with a card belonging to the customer;
crediting funds from the card of the customer to an account associated with the third party acquirer;
crediting the funds from the account associated with the third-party acquirer to an issuer associated with a card belonging to the merchant such that the card belonging to the merchant is credited.

4. The computer implemented method of claim 3, wherein prior to presenting to the customer said option, the method further comprises:
sending, from the merchant to the third-party acquirer, a request to register with said third party acquirer, wherein said request comprises providing merchant account details to said third party acquirer, said account details for crediting funds to the card belonging to the merchant.

5. The computer implemented method of claim 2, wherein routing the transaction through the second payment rail comprises:
presenting to a customer, by the merchant, an option to make a payment using the second payment rail, wherein using the second payment rail;
upon receiving approval from the customer of said option, providing details of a bank account associated with the merchant to the customer;
receiving a transfer of funds from a bank account associated with the customer to the bank account associated with the merchant.

6. The computer implemented method of any preceding claim, wherein the first payment rail is a card payment rail.

7. The computer implemented method of any preceding claim, wherein the second payment rail is an open banking transaction rail, or a push to card transaction.

8. The computer implemented method of any preceding claim, wherein the deviation is a reduction.

9. The computer implemented method of any preceding claim, wherein the average number of transactions is an average number of successful transactions.

10. The computer implemented method of any preceding claim, wherein the deviation is an increase.

11. The computer implemented method of any preceding claim, wherein the average number of transactions is an average number of unsuccessful transactions.

12. The computer implemented method of any preceding claim, wherein alerting, by the server, to the merchant that there is a failure at the merchant acquirer associated with the first payment rail, is performed if said detected deviation exceeds a threshold value.

13. A server, for detecting a failure at a merchant acquirer associated with a first payment rail and processing a transaction in the event of said failure, the server comprising a memory and processor, wherein the server is configured to:
monitor transactions over a first payment rail, said transactions originating at a merchant, over a first time period of a set length, to determine a number of transactions during the first time period;
monitor transactions over a first payment rail, said transactions originating at a merchant, over a second time period of said set length, to determine a number of transactions during the second time period;
determine an average number of transactions originating at said merchant over a time period, of said set length, from said monitoring steps;
continually monitor transactions over the first payment rail, said transactions originating at said merchant, over a series of time periods, each time period of the series of time periods being of said set length, and for each time period of the series of time periods: comparing a number of transactions during said time period of the series of time periods to said average number of transactions;
detect from this comparison, a deviation, wherein the deviation is a difference in the number of transactions from the average number of transactions;
upon detection of said deviation, alert to the merchant that there is a failure at the merchant acquirer associated with the first payment rail;
send to said merchant approval to use a second payment rail such that the merchant can route transactions through said second payment rail when there is a failure at the merchant acquirer associated with the first payment rail.

14. A system for detecting a failure at a merchant acquirer associated with a first payment rail and processing a transaction in the event of said failure, the system comprising:
the server of claim 13; and
a merchant.

15. A computer program product comprising instructions which, when the program is executed by a computer, cause the computer to carry out the method of claim 1 to 12.
